**Europäisches Patentamt**

**European Patent Office**

**Office européen des brevets**

(11) Veröffentlichungsnummer: **0 195 966**
A2

## (12) EUROPÄISCHE PATENTANMELDUNG

(21) Anmeldenummer: 86102986.6

(22) Anmeldetag: 06.03.86

(51) Int. Cl.⁴: **B 07 C 5/34**, G 06 K 7/10

(30) Priorität: 25.03.85 DE 3510755

(43) Veröffentlichungstag der Anmeldung: 01.10.86
Patentblatt 86/40

(84) Benannte Vertragsstaaten: AT CH DE LI NL

(71) Anmelder: H&K Verpackungstechnik GmbH, Niederste Feldweg 29, D-4600 Dortmund 1 (DE)

(72) Erfinder: Bruder, Harald R., Schwerter Strasse 346, D-4600 Dortmund 41 (DE)

(54) **Einrichtung zum Erkennen von Kennzeichenelementen an Transportanlagen für Stückgüter und dgl.**

(57) Insbesondere in der Getränkeindustrie werden häufig unterschiedlich ausgebildete wiederverwendbare Flaschenkästen benutzt, die aufgrund ihrer unterschiedlichen Farbe und Ausstattung sortiert werden müssen. Um die Möglichkeit einer solchen automatischen Decodierung auch bei bereits in Umlauf befindlichen älteren Flaschenkästen zu geben, wird eine Einrichtung zum Erkennen von Kennzeichenelementen vorgeschlagen, die sich auszeichnet durch eine Einrichtung als Decodierstation zur Ermittlung von Kennzeichenelementen an solchen Stückgütern, eine zweite Einrichtung als Codierstation zur Anbringung der Kennzeichenelemente, die in Abhängigkeit von dem Ergebnis der ersten Einrichtung in Tätigkeit setzbar ist, eine dritte Einrichtung als Steuereinrichtung zum Umwandeln der Zeichen in Steuersignale zum Steuern des Stückgutes in die entsprechende Transportbahn.

0195966

- 1 -

<u>Einrichtung zum Erkennen von Kennzeichenelementen an
Transportanlagen für Stückgüter und dgl.</u>

Die Erfindung bezieht sich auf eine Einrichtung zum Erkennen von Kennzeichenelementen an Transportanlagen für Stückgüter und dgl., insbesondere zum Erkennen derartiger Elemente an wiederverwendbaren Verpackungsbehältern wie Flaschenkästen und dgl., die in verschiedenartigen Typen dem Transportweg zugegeben werden.

Insbesondere in der Getränkeindustrie werden häufig unterschiedlich ausgebildete wiederverwendbare Flaschenkästen benutzt, die aufgrund ihrer unterschiedlichen Farbe und Ausstattung sortiert werden müssen. Es ist denkbar, derartige wiederverwendbare Kästen von vornherein mit einer Kennzeichnung auszustatten, die es erlaubt, einen nicht der Norm entsprechenden Kasten automatisch auszusortieren. Eine solche Kennzeichnung kann beispielsweise in Farbe des Kastens, das benutzte Material, die entsprechenden Reklamezüge usw. aufnehmen. Es wäre möglich, derartige Informationen bei Auslieferung des entsprechend befüllten Kastens vorzunehmen. Diese Maßnahme scheidet aber deshalb aus, weil die relativ rauhe Handhabung von Kästen in kurzer Zeit zur Zerstörung dieser Kennzeichnung führen würde und damit eine automatische Aussortierung und Erkennung ausscheidet. Aus diesem Grunde ist die Anbringung entsprechender Informationsträger praktisch nur bei der eigentlichen Herstellung eines solchen Kastens von Bedeutung. Da aber bereits eine Vielzahl solcher nicht gekennzeichneter Kästen in Umlauf ist, würde eine automatische Erkennung jedenfalls solange ausscheiden, bis alle in Umlauf befindlichen nicht codierten Kästen ausgemustert sind.

- 2 -

Um hier Abhilfe zu schaffen, hat sich die Erfindung die Aufgabe gestellt, die Möglichkeit einer solchen automatischen Decodierung auch bei bereits in Umlauf befindlichen älteren Kästen zu geben, wobei einerseits die Farbe, die Ausstattung, der Zustand und ggf. auch das Datum der Ausmusterung erkennbar sein sollen.

Zur Lösung dieser Aufgabe schlägt die Erfindung eine Einrichtung zum Erkennen von Kennzeichenelementen der eingangs genannten Art vor, die sich auszeichnet durch

eine Einrichtung als die Decodierstation zur Ermittlung von Kennzeichenelementen an solchen Stückgütern,

eine zweite Einrichtung als Codierstation zur Anbringung solcher Kennzeichenelemente, die in Abhängigkeit von dem Ergebnis der ersten Einrichtung in Tätigkeit setzbar ist,

eine dritte Einrichtung als Steuereinrichtung zum Umwandeln der Zeichen in Steuersignale zum Steuern des Stückgutes in die entsprechende Transportbahn.

Hierbei hat es sich als zweckmäßig erwiesen, daß die Einzeleinrichtungen mindestens teilweise in einer gemeinsamen einzigen Einrichtung zusammengefaßt sind.

Ferner wird vorgeschlagen, daß die Kennzeichnungseinrichtung eine Zentriervorrichtung aufweist und mit einer und/oder mehreren gegen die Kastenwandung bewegbaren Codiervorrichtungen ausgestattet ist, durch welche an der Wandung bleibende und wiederlesbare Veränderungen als Informationsgeber anbringbar sind.

0195966

Mit der hier vorgeschlagenen Einrichtung ist es möglich, die eingangs gestellten Anforderungen vollauf zu erfüllen. Der zulaufende Transportkasten kann hinsichtlich seines äußeren Zustandes, seiner Farbe, seines Alters und dgl. kontrolliert und, sofern noch nicht geschehen, codiert und/oder aussortiert werden.

Um eine bleibende und wiederlesbare Kennzeichnung zu finden, wird in selbständiger Ausgestaltung der Erfindung vorgeschlagen, daß dieses Kennzeichenelement als Bohrungsgruppe für unterschiedliche Informationen und Anweisungen ausgebildet ist.

Dabei hat es sich als zweckmäßig erwiesen, daß die Bohrungsgruppen und/oder Wandungsveränderungen auf einander gegenüberliegenden Wandungsseiten des Kastens angeordnet sind. Auf diese Weise ist es möglich, einen beispielsweise in Längsrichtung einlaufenden Kasten unabhängig von seiner der Codierstation zugeordneten Seite zu erkennen.

Im Rahmen der Erfindung wird ferner vorgeschlagen, daß als Decodierstation eine pneumatische und/oder optische Abtastvorrichtung zum Ermitteln der von der Wandungsveränderung abgegebenen Information vorgesehen ist.

Schließlich gehört es zu der Erfindung, daß die Abtastvorrichtung eine der Position und Anzahl der Wandungsveränderungen entsprechende Anzahl und Zuordnung von Sensoren und/oder Tasteinrichtungen aufweist.

Anstelle der bevorzugten Bohrungen, die in beliebiger Zahl und Größe zueinander gruppiert werden können, ist es im Rahmen der Erfindung auch denkbar, anders geartete Veränderungen auf der Oberfläche durch Gravur oder dgl. vorzusehen, die über eine längere Distanz bei den wiederverwendbaren Behältern als Informationsträger lesbar bleiben.

Im nachfolgenden wird die Erfindung anhand eines in der Zeichnung dargestellten Ausführungsbeispiels näher erläutert.

In der Zeichnung zeigt:

Fig. 1 eine schematische Draufsicht auf die Einrichtung mit vereinfacht dargestellten Transportsystemen,

Fig. 2 die Längsseitenansicht eines Kastens mit entsprechenden Markierungen,

Fig. 3 einen Kasten in Draufsicht und

Fig. 4 einen vergrößerten Ausschnitt der Informationsträgerstelle eines solchen Kastens.

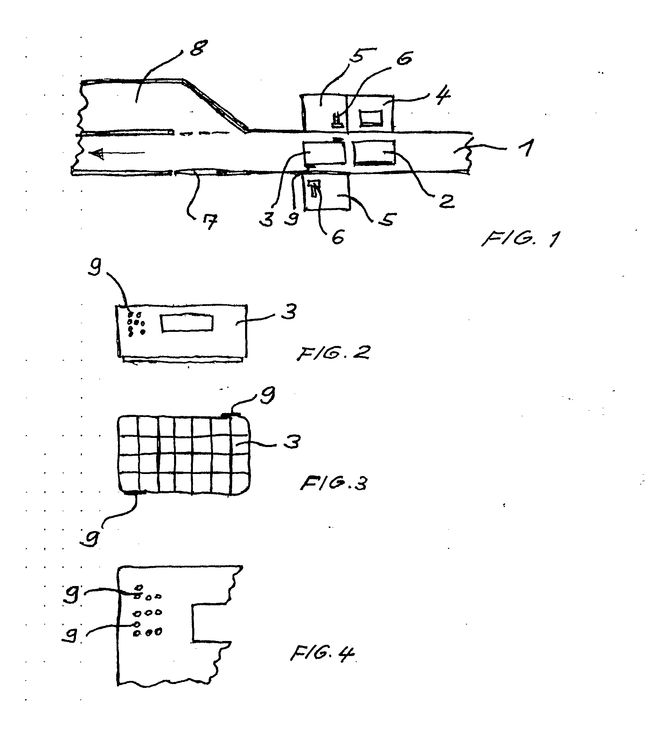

Gemäß dem in Fig. 1 dargestellten Ausführungsbeispiel besteht die Einrichtung zum Erkennen von Kennzeichenelementen aus dem eigentlichen Transporteur 1, dem die Kästen 2, 3 nacheinander zugegeben werden. Am Rande der Bewegungsbahn dieser Kästen 2, 3 ist eine Einrichtung als Decodierstation 4 und eine zweite Einrichtung als Codierstation 5 vorgesehen.

Die Codierstation 5 ist zweckmäßig auf einander gegenüberliegenden Seiten des Transportweges der Kästen 2, 3 angeordnet, um, wie die Zeichnung zeigt, an den Längsseiten mit entsprechenden Informationsträgern versehen werden zu können. Diese Informationsträger können gemäß dem in Fig. 2 dargestellten Ausführungsbeispiel als Bohrungsgruppe 9 für unterschiedliche Informationen und Anweisungen ausgebildet sein. Insbesondere aus Fig. 4 ist ersichtlich, daß hierbei eine beliebige Zuordnung und Gruppierung von Bohrungsteilen möglich ist, so daß praktisch alle erforderlichen Informationen, die abgegeben werden sollen, an einer solchen Kastenwandung anbringbar und lesbar sind. Diese Informationen können sich auf die Farbe, den Zustand, das Ausmusterungsdatum, das Codierdatum, das Material, den verwendeten Getränkeindustriebetrieb usw. eines solchen Kastens beziehen. Anstelle dieser bevorzugt gewählten Bohrungsgruppe als Informationsträger sind allerdings auch in gleicher Weise andere bleibende Veränderungen der Oberfläche wie Gravuren oder dgl. als Informationsträger denkbar.

Die einlaufenden Kästen 2 werden zunächst in der Decordierstation 4 überprüft. Sofern hierbei ein noch nicht gekennzeichneter Kasten ermittelt werden sollte, wird über entsprechende Signale die Codierstation 5 in Tätigkeit gesetzt. Hierbei ist es denkbar, daß eine Vorrichtung 6, belegt mit den enstprechenden Informationen aus der Decordierstation 4, gegen die Kastenwandung des Kastens 3 verfährt und diesen entsprechend codiert. Dieser Kasten kann dann dem normalen Transportfluß zugegeben und, ggf. nach einer Reinigung, erneut mit Flaschen oder dgl. bestückt werden. Sofern in der Decodierstation 4 ein Kasten ermittelt wird, der nicht den gewünschten Anforderungen entspricht, kann mit Hilfe der ermittelten Decodierstation eine Weiche 7 in Tätigkeit gesetzt werden, wodurch dieser nicht gewünschte Kasten auf eine Nebenbahn 8 des Transportsystems abgedrängt und ausgeschieden wird.

Um eine möglichst schnelle Codierung aller nicht codierten und in Umlauf befindlichen Kästen vornehmen zu können, ist es selbstverständlich möglich, die geeigneten und der Norm entsprechenden Kästen vorher zu ermitteln und anschließend nacheinander in die Codierstation 5 zu geben, wo sie entsprechend markiert und dem normalen Transportfluß zugegeben werden können.

Patentansprüche:

1. Einrichtung zum Erkennen und Anbringen von Kennzeichenelementen an Transportanlagen für Stückgüter und dgl., insbesondere zum Erkennen derartiger Elemente an wiederverwendbaren Verpackungsbehältern wie Flaschenkästen und dgl., die in verschiedenartigen Typen dem Transportsystem eingegeben werden, gekennzeichnet durch eine Einrichtung als Decodierstation zur Ermittlung von Kennzeichenelementen an solchen Stückgütern, eine zweite Einrichtung als Codierstation zur Anbringung solcher Kennzeichenelemente, die in Abhängigkeit von dem Ergebnis der ersten Einrichtung in Tätigkeit setzbar ist, eine dritte Einrichtung als Steuereinrichtung zum Umwandeln der Zeichen in Steuersignale zum Steuern des Stückgutes in die entsprechende Transportbahn.

2. Einrichtung nach Anspruch 1, dadurch gekennzeichnet, daß die Einzeleinrichtungen mindestens teilweise in einer gemeinsamen einzigen Einrichtung zusammengefaßt sind.

3. Einrichtung nach Anspruch 1, dadurch gekennzeichnet, daß die Codierstation eine Zentriervorrichtung aufweist, und mit einer und/oder mehreren gegen die Kastenwand bewegbaren Codiervorrichtungen ausgestattet ist, durch welche an der Wandung bleibende und wiederlesbare Veränderungen als Informationsträger anbringbar sind.

4. Kennzeichenelement als Informationsträger an Kastenoberflächen, dadurch gekennzeichnet, daß dieses Kennzeichenelement als Bohrungsgruppe für unterschiedliche Informationen und Anweisungen ausgebildet ist.

5. Kennzeichenelement nach Anspruch 4, dadurch gekennzeichnet, daß die Bohrungsgruppen und/oder Wandungsveränderungen aufeinander gegenüberliegenden Wandungsseiten des Kastens angeordnet sind.

6. Einrichtung nach Anspruch 1, dadurch gekennzeichnet, daß als Decodierstation eine pneumatische und/oder optische Abtastvorrichtung zum Ermitteln der von der Wandungsveränderung abgegebenen Information vorgesehen ist.

7. Einrichtung nach Anspruch 6, dadurch gekennzeichnet, daß die Abtastvorrichtung eine der Position und Anzahl der Wandungsveränderungen entsprechende Anzahl und Zuordnung von Zensoren und/oder Tasteinrichtungen aufweist.

- 1/1 -

FIG. 1

FIG. 2

FIG. 3

FIG. 4